# EUROPEAN PATENT SPECIFICATION

(11) **EP 3 367 139 B1**
(45) Date of publication and mention of the grant of the patent: **25.08.2021**
(21) Application number: 17158295.0
(22) Date of filing: 28.02.2017
(51) Int. Cl.: G01S 3/786, G02B 5/08, F24S 50/20, F24S 23/77, H02S 20/10, H02S 20/32, F24S 23/70, F24S 30/452

(54) **AUTONOMOUS FACET FOR SOLAR CONCENTRATORS AND SOLAR CONCENTRATOR COMPRISING SAID FACET**
AUTONOME FACETTE FÜR KONZENTRATOREN UND SOLARKONZENTRATOREN MIT DIESER FLÄCHE
FACETTE AUTONOME POUR CONCENTRATEURS SOLAIRES ET CONCENTRATEUR SOLAIRE COMPRENANT LADITE FACETTE

(43) Date of publication of application: 29.08.2018
(73) Proprietor: Carrascosa Perez, Marco Antonio, 28320 Pinto (Madrid) (ES)
(72) Inventor: Carrascosa Perez, Marco Antonio, 28320 Pinto (Madrid) (ES)
(74) Representative: Temiño Ceniceros, Ignacio

(56) References cited:
- EP-A1- 2 639 525
- EP-A1- 2 940 400
- WO-A1-2011/117710
- WO-A1-2014/088207
- US-A1- 2009 249 787
- US-A1- 2010 252 024
- US-A1- 2011 000 478
- US-A1- 2014 174 430

## Description

### FIELD OF THE INVENTION

The invention relates to a facet for solar concentrators, preferably applied to solar concentration technologies for generating energy. More specifically, the invention relates to a heliostat facet comprising one or more autonomous tracking, calibration or adjustment means which are integrated inside the facet, as well as auxiliary means for providing autonomous power supply thereto.

### BACKGROUND OF THE INVENTION

Since the beginning of the 1980s, a great variety of initiatives for the development of power plants using solar thermal concentration have been envisaged. Those technologies have been mainly based on the production of electricity by means of solar concentrators such as parabolic trough collectors or heliostats.

At present, known technologies for solar thermal power generation are subject to high demands in terms of performance, generation capacities and cost feasibility. This is due, among other reasons, to the complexity and diversity of the systems required in solar generation plants, which usually include civil works, foundations, mechanical, hydraulic, electrical, electronic and software equipment, whose proper integration requires significant installation and maintenance costs.

In addition to the above, the elements comprised in plants for solar thermal power generation generally have high technical interdependence which, in turn, reduces their modularity and scalability. This means that, in practice, each installation project of such plants must be individually designed for the study and planning of its implementation and production processes. Moreover, solar concentration technologies require high accuracy of their focusing and tracking systems (for example, in tower concentrators), which requires carrying out specific tasks for this purpose, such as reducing optical errors (for example, slope error effect in heliostats) by adequately canting the facets and applying a fine adjustment of its reflecting surfaces. These operations are applied, periodically during the plant lifespan, manually heliostat by heliostat, and the same happens for their calibration in order for them to appropriately concentrate and reflect the solar light towards the receiver. On the other hand, one of the most important features in the construction of solar fields corresponds to the elaboration of ditches and laying of wiring for electrical supply and communication between heliostats. Other main costs are the development of adequately levelled foundations where the heliostats are installed, and the assembly and precise orientation of the facets that make up each heliostat, with its subsequent calibration to allow the solar radiation to be reflected as focused as possible to the desired receiving point. Additionally, the state-of-the-art slope error of heliostats is about 1.5 mrad, which require very large solar fields (more than 1500 m radius) to achieve a nominal power of about 110 MW.

In view of these problems it is therefore desirable to have autonomous solar concentrators which avoid the need of power or communication cables, which can be installed in a scalable and modular way in production plants regardless of their size or specific characteristics, and without requiring additional individualised works of engineering, manufacturing or installation. It is also desirable a better slope error lower than 1 mrad and a foundation requirement simplification to reduce costs. As a partial solution to this need different technical approaches have been proposed, such as those described in patent applications WO 2005/098327, US 2010/300510 A1, US 2008/011288 A1 or ES 2393095 A1 of the prior art.

Patent application WO 2005/098327 discloses powering the heliostats through the use of photovoltaic modules which are attached to their structure, as well as the possibility of their autonomous behaviour through wireless communication systems, thus eliminating the need for wiring the solar field, but without alleviating the problems arising from the assembly, canting, calibration and maintenance of a heliostat with multiple facets. In order to reduce costs of calibration, this patent proposes the use of a CCD or CMOS visual sensor that will detect a plurality of known places that will be used to triangulate the heliostat position. However, this procedure translates the sensor-canting surface positioning error directly into a tracking error. Because of that, a high accuracy of sensors and mechanisation of components is required, which involves a high cost.

Patent application ES 2393095 A1 discloses an autonomous solar concentrator, comprising the integration of photovoltaic panels in its structure which charge a capacitor assembly. However, this improvement does not eliminate or reduce the problems resulting from the assembly, canting, calibration and general maintenance of a system of multiple facets in large concentration solar thermal plants, since it only eliminates the need for power wiring the heliostat. In addition, because of its design, the position of the photovoltaic module is fixed, so that its production will be lower during some periods of the day, depending on the relative position of the sun. Also, due to its design, some of the effective reflective area is lost in the central region of the heliostat, in order to accommodate the photovoltaic module while avoiding the pedestal. This system does not solve the need of high accuracy foundations and adds the cost of the solar module and its support to that of the heliostat.

Patent application US 2010/300510 A1 discloses solar concentrators equipped with facets that allow reflection or photovoltaic generation as a function of the angle of incidence of solar radiation. The facets used in solar concentration technologies require a proper curvature and high optical quality in order to reflect the maximum possible solar energy on the receiver. However, the technology disclosed in US 2010/300510 A1 does not allow reflecting the maximum energy available throughout the day, as solar angles of incidence on the reflector prevent proper control of the amount of energy reflected and absorbed, being variable throughout the day and the year. Further, this design does not allow using the same configuration in the whole solar field and, depending on the solar position, will yield insufficient reflection/photovoltaic production at some point of the day. In addition to this, the use of glasses with dichroic properties requires them to be subjected to processes of hot chemical vapour deposition (or CVD), in order to deposit the metal oxides over the glasses, thereby increasing their cost and decreasing the solar reflectance. Additionally, this system does not reduce the foundation or calibration costs of the whole solar field.

Finally, patent application US 2008/011288 A1 discloses solar concentrators comprising external accelerometer sensors for measuring the movement relative to a reference position. Since it is necessary to guarantee the relative position between these sensors, the reflective surface and the turning points of the system, the assembly itself becomes extremely expensive while needing high requirements of mechanical precision. Due to their nature and operation, these devices by themselves only serve to determine the position of the surface with respect to a given position, as is usually done by other devices such as magnetic tapes or rotary encoders. Thus this system does not eliminate the need for manual calibration of each of the heliostats, usually performed sequentially one by one, as the systems of photoelectric sensor or CCD ("charge-coupled device") cameras used in the prior art do not allow to differentiate the origin of the reflected light, but only of the incident light. This highly increases the time needed for the calibration and later adjustment of the whole solar field. Furthermore, these devices require a power source and have certain risks of damage when exposed to the environment.

Document EP 2639525 A1 discloses a facet according to the preamble of claim 1.

With the limitations described in the preceding paragraphs it becomes thus necessary, in the present technical field, to provide an autonomous solar concentrator whose efficiency improves the known solutions of the prior art, while also reducing installation time and cost per heliostat square meter, enabling its adaptation to the specific needs of each solar thermal power generation plant, and facilitating the maintenance of its modules to increase the collection, concentration and use of solar radiation. Additionally, none of the previous references includes a solution to reduce the optical quality of the heliostats under the best state-of-the-art value of 1.4 mrad.

To this end, the present invention proposes a novel autonomous and self-supporting facet that integrates all the necessary auxiliary systems for operation and installation as well as its application to a solar concentrator devised for its implementation in any solar power plant, whose technical realization allows solving the afore-mentioned problems of the prior art.

### SUMMARY OF THE INVENTION

The object of the present invention relates, without limitation, to the development of an autonomous and self-supporting facet for solar concentrators, suitable for its installation in a solar thermal plant. This facet is designed so that its performance becomes significantly increased, while its typical installation and maintenance times and costs are minimized compared to other known facets, being preferably adaptable to applications of heliostats and tower receivers, or to any solar concentrator technology, due to its structural components and simplicity.

Said facet preferably comprises a sandwiched layer arrangement including a front layer which comprises a reflective surface of the facet; an intermediate layer; and a rear layer for closing, insulating and/or supporting the intermediate layer. According to the invention, the facet further comprises one or more self-calibration sensors for orientating the reflective surface towards the solar position and/or a radiation receiver, wherein said sensors are integrated, at least in part, in the front layer of the facet, and arranged at one or more housings formed at the intermediate layer thereof.

By arranging the sensors at the level of the reflective surface, they can directly take said surface as reference for calibration and measuring purposes, therefore avoiding the need of further auxiliary references or calculations in order to align their results with the proper orientation of the facet towards the sun or the receiver. In other words, the results obtained by the sensors can be directly applied to the positioning and alignment of the facet, since they share a common surface reference. Also, depending on the specific solar concentration technology used and the geometry of the facet, the sensors can be arranged at different points of the reflective surface, such as the center, its edges or its corners.

The facet preferably comprises a reflective surface of high optical quality and reflectance and a sandwiched layer structure, within which is disposed a sensor assembly forming an integrated system of self-calibration, including a sensor for its orientation relative to the sun position, and wherein the sensor assembly is preferably located at the central region of the facet. In a preferred embodiment of the invention, the facet further comprises a series of integrated inclinometers that allow reaching an accurate positioning of the facet towards the sun and the remote receiver, reducing foundation and structure accuracy requirements by automatically correcting the tracking deviations.

It is thus achieved that the position of the solar concentrator can be calculated and adapted by configuring the sensors and the actuation mechanism of the concentrator by suitable orientation algorithms, the readings taken by the inclinometers and the position of the receiver located at the central tower of the solar plant. Thus, errors in solar tracking can be corrected so that the energy concentrated at the receiver is maximized. These features eliminate the need to use or install high-precision auxiliary calibration elements and subsequent periodic adjustments in the solar plant. Also, the use of the self-calibration system of the invention reduces the mechanical and positioning requirements of the concentrator structure, as these errors can be corrected by the algorithms of the control system, which take into account the readings of the integrated sensors in the facet. Thus, a in a preferred embodiment of the invention, a solar concentrator (for example, a heliostat) composed of a single facet may be fixed to the ground by direct interlocking with the same, without the use of further foundation elements.

In yet another preferred embodiment of the facet, it further comprises an artificial vision camera to identify the environment and other elements of the solar plant where it is installed, complementing the solar sensors and the inclinometer of the self-calibration system.

In a further preferred embodiment of the invention, the facet can reach larger typical sizes than facets known in the prior art without reduction of its performance. The fact that the solar concentrator comprises a single facet eliminates costs and time delays associated with the process of canting or positioning the reflective surfaces, which typically occurs when the concentrator comprises several facets, in order to increase the optical quality of the assembly. For example, in a heliostat that is configured with a single facet, the curvature of the mirror needed to properly focus the energy on the receiver is typically obtained at the factory, thus eliminating canting and assembly errors of the reflecting surface, and leaving only the remaining optical quality of the facet, halving the slope error of the heliostat.

In addition to the above features, the facet of the invention advantageously comprises an integrated photovoltaic panel, preferably located at the upper area of the facet's surface, which generates enough energy to power the concentrator in operation and in stand-by, being therefore autonomous and eliminating the need for power wiring the solar field, without needing an additional structural support for the photovoltaic module. By combining this feature with the use of wireless communication systems, such as a *Low Power Wide Area Network* (LoRaWAN), the need for solar field communications wiring is also eliminated, making its installation much easier. Moreover, the integration of the photovoltaic system within the facet's structure increases electricity generation compared to the case where the photovoltaic panel was fixed to another region of the heliostat, without taking advantage of the auto-calibration means.

In yet another preferred embodiment of the invention, the facet further comprises an integrated grid for thermal dissipation, which prevents the reduction of performance of the photovoltaic panel due to a temperature rise at the photovoltaic cells. In a further preferred embodiment of the invention, heat dissipation is produced through a series of channels or orifices disposed in the inner part of the facet, and more preferably on the back side of the photovoltaic panel, practiced mechanically or by removable inserts after the manufacturing process of the facet.

With the integration of these modules within the facet the complexity of installation and maintenance is therefore reduced, simplifying the structure of the solar concentrator and reducing its mechanical requirements. Also, the need for auxiliary foundations and power or communications wiring at the solar field is removed.

In another preferred embodiment of the invention, due to the use of a sandwich-type structure for the facet, stiffness values above 200 Pa/mrad_{RMS} can be achieved, as well as spherical curvatures of high optical quality with typical form error values below 0.65 mrad.

In another preferred embodiment of the invention, the facet allows the use of front mirrors with thickness values between 0.95 mm and 2.00 mm.

In a preferred embodiment of the facet, it is integrated into a solar concentrator, preferably capable of two-axis tracking. Said concentrator constitutes a further object of the present invention and comprises:
- a self-supporting facet according to any of the embodiments described herein;
- a pedestal;
- a control unit of the concentrator;
- a system or a set of systems configured for conferring two-axis tracking capabilities to the concentrator.

By using the solar concentrator of the invention, the positioning drives needed are of greater simplicity than those known in the prior art, due to the reduction of the total charges on the heliostat, compared to those generated over a larger area formed by several facets.

In a preferred embodiment of the invention, the solar concentrator comprises a wireless communication system, allowing it to be fully independent and autonomous, thus eliminating the need for further communication wiring. Preferably this communication system will be integrated into the concentrator's control unit (for example, arranged at its pedestal). Preferably, this wireless communication system is a LoRaWAN network or an equivalent system with low consumption and high security communication protocols.

In a preferred embodiment of the invention, the concentrator comprises a system for electrical energy storage, thus allowing it to continue operating and communicating even when the photovoltaic unit is not operative. Preferably said storage system is integrated into the control unit of said concentrator.

As described in the preceding paragraphs, the invention proposes thus a solution based on autonomous facets for solar concentrators, which results in a substantial cost reduction per square meter in the entire solar field, and a simplification of the concentrator assembly and calibration systems thereof thus reducing the overall cost of energy production.

### DESCRIPTION OF THE DRAWINGS

Figure 1 shows a perspective view of the front region of a heliostat and an integrated facet according to a preferred embodiment of the invention.
Figure 2 shows a perspective view of the rear region of a heliostat and an integrated facet according to a preferred embodiment of the invention.
Figure 3 shows an exploded view of a facet according to a preferred embodiment of the invention, where its main elements are depicted.

### NUMERICAL REFERENCES USED IN THE DRAWINGS

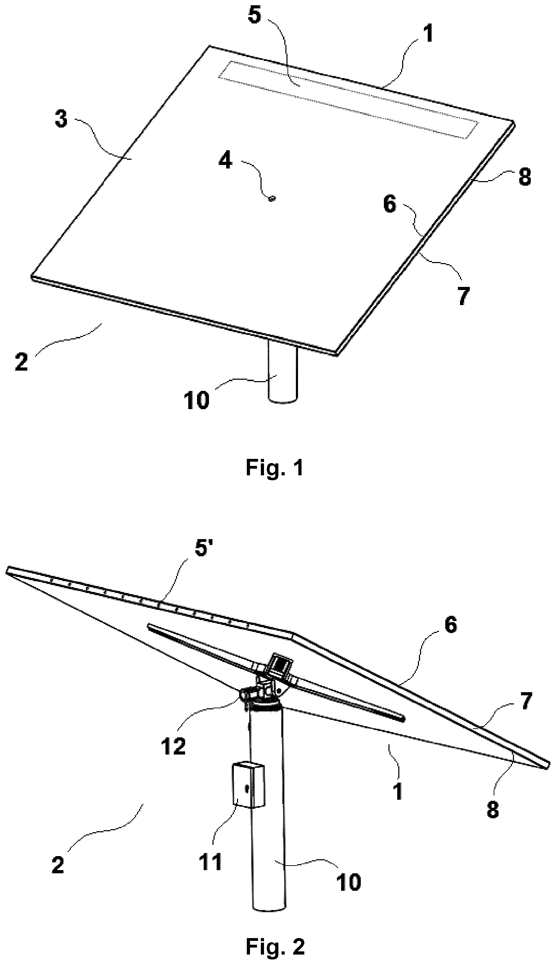

In order to provide a better understanding of the technical features of the invention, the referred Figures 1-3 are accompanied of a series of numeral references which, with an illustrative and non limiting character, are hereby represented:

| | |
|---|---|
| (1) | Autonomous facet |
| (2) | Autonomous solar concentrator, heliostat |
| (3) | Reflective surface of the facet |
| (4) | Self-calibration integrated sensors |
| (5) | Integrated photovoltaic panel |
| (5') | Plurality of channels or holes connected to the photovoltaic panel |
| (6) | Front layer of the facet |
| (7) | Rear layer of the facet |
| (8) | Intermediate layer of the facet |
| (9) | Sensor and/or photovoltaic panel housings |
| (9') | Housing for the photovoltaic panel |
| (10) | Pedestal of the solar concentrator |
| (11) | Solar concentrator control unit |
| (12) | Solar concentrator drive system |

### DETAILED DESCRIPTION OF THE INVENTION

A preferred exemplary embodiment of the present invention, provided for illustrative but not limiting purposes, is hereby described. As shown in Figures 1 and 2, the present invention proposes an autonomous and self-supporting facet (1) suitable for its integration in a solar concentrator (2) (being, for example, a heliostat). The facet (1) comprises a reflective surface (3), preferably of high optical quality and reflectance, to be used for redirecting the received solar radiation towards a receiver element. In heliostat technologies such receiver element may be, for example, a tower receiver.

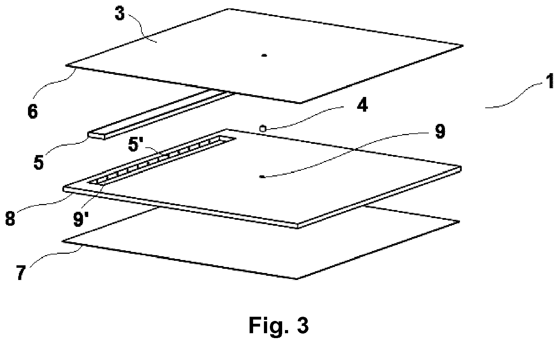

In order to increase its autonomy and functionality, the facet (1) of the invention advantageously comprises one or more self-calibration sensors (4) for assisting the driving means of the solar concentrator (2) in its positioning and tracking operations, wherein said sensors (4) are integrated into the structure of the facet (1) and preferably located at the central region thereof, as shown in Figure 3. As also mentioned, the facet (1) may comprise several sets of sensors (4), and these may be distributed along different points along the facet's surface. In a preferred embodiment of the invention, the sensors (4) comprise an integrated inclinometer for measuring the angular position of the facet (1) and facilitating proper orientation of the reflective surfaces of the solar concentrator (2). Other sensors (4) usable in the scope of the invention are, for example, artificial vision cameras or radiation detectors.

As shown in Figure 3 and according to an optional embodiment of the invention, the facet (1) can further comprise an integrated photovoltaic panel (5), configured for receiving solar radiation and generating enough energy to power up the solar concentrator (2) for its operation, making it autonomous and eliminating the need for power wiring in the solar field.

In another preferred embodiment of the facet (1), it further comprises an integrated grid for thermal dissipation (not shown in the figures) which is fixed to the surfaces of the photovoltaic panel (5) and prevents potential decreases in the performance thereof, due to the increase in temperature of the photovoltaic cells. Thus, increase of temperature at the photovoltaic panel (5) and the reflective surface (3) of the facet (1) is avoided. Alternatively, and yet another preferred embodiment of the invention, heat dissipation can be carried out through a plurality of channels or holes (5') arranged at the inner region of the photovoltaic panel (5), or it can be mechanically produced by removable inserts after the manufacturing process of the facet (1).

With regard to its internal structure and as shown in Figure 3, the facet (1) of the invention is preferably manufactured by setting an arrangement of sandwiched layers, comprising a front layer (6) which integrates the reflective surface (3) of the facet (1), a rear layer (7) which is used as closure, insulation and/or support means of the internal elements of the facet (1), and an intermediate layer (8) comprising one or more housings (9, 9') configured to allocate the integrated sensors (4) in the facet (1), as well as, optionally, the photovoltaic panel (5).

In a preferred embodiment of the invention, the integrated elements such as the sensors (4) or the photovoltaic panel (5) are covered totally or partially by the front layer (6) of the facet (1). In this way, it is possible to isolate said elements from the outside, reducing risks of malfunction or errors of operation associated with their exposure to the environment. The above-mentioned embodiment also offers an extremely compact and robust solution, as well as a reduction of both installation and maintenance complexity, thus simplifying the structure of the solar concentrator (2), reducing its mechanical requirements and eliminating the need for high accuracy and stiffness foundations or auxiliary structures.

In another preferred embodiment of the invention, due to the sandwich technology employed, the facet (1) can be manufactured achieving high rigidity values, preferably equal or greater than 200 Pa/mrad_{RMS}, and a spherical curvature with high optical quality, with form errors preferably equal or below 0.65 mrad. In another preferred embodiment of the facet (1), the front layer (6) comprises a reflective mirror having a thickness preferably comprised between 0.95 mm and 2.00 mm.

In a preferred embodiment of the invention, the facet (1) is integrated into a solar concentrator (2) preferably configured for two-axis tracking and, more preferably, said solar concentrator (2) being a heliostat (Figures 1-2). The solar concentrator (2) represents thus a further object of the present invention, and preferably comprises:
- a facet (1) according to any of the embodiments described herein;
- a pedestal (10) arranged as a main structural support means for the concentrator (2);
- a control unit (11) of the solar concentrator (2), preferably arranged at the pedestal (10);
- a drive system (12) or set of systems configured to confer the solar concentrator (2) two-axes (for example, zenithal and azimuthal) rotation capacities.

In a preferred embodiment of the invention, the solar concentrator (2) comprises a wireless communication system, allowing said concentrator (2) to be fully independent and autonomous, thus eliminating the need for communications wiring in the solar field. Preferably this communication system will be integrated into the control unit (11) of the solar concentrator (2).

In yet another preferred embodiment of the invention, the solar concentrator comprises a system of electrical energy storage, allowing it to continue operating and communicating even when the photovoltaic panel (5) or the facet (1) are not generating electricity. Preferably, said storage system will be integrated into the control unit (11) of the solar concentrator (2).

## Claims

1. Autonomous facet (1) suitable for use as reflective element of a solar concentrator (2), which comprises:
- a sandwiched layer (6, 7, 8) arrangement, including a front layer (6) which comprises a reflective surface (3) of the facet (1); an intermediate layer (8); and a rear layer (7) for insulating and/or supporting the intermediate layer (8), **characterized in that** said facet (1) further comprises:
- one or more self-calibration sensors (4) for orientating the reflective surface (3) towards the solar position and/or a radiation receiver; wherein:
- said sensors (4) are integrated, at least in part, in the front layer (6) of the facet (1) and arranged at one or more housings (9) formed at the intermediate layer (8) thereof; and
- at least one sensor (4) comprises a front surface which is levelled with the reflective surface (3) of the facet (1).

2. Facet (1) according to the preceding claim wherein the sensors (4) comprise an integrated inclinometer for measuring the angular position of the facet (1); one or more artificial vision cameras; and/or one or more radiation detectors.

3. Facet (1) according to any of the preceding claims wherein the sensors (4) are wholly or partially covered by the front layer (6) of said facet (1).

4. Facet (1) according to any of the preceding claims, comprising a rigidity value equal or greater than 200 Pa/mrad_{RMS},

5. Facet (1) according to any of the preceding claims, wherein the front layer (6) comprises a reflective mirror with a thickness value comprised between 0.95 mm and 2.00 mm.

6. Facet (1) according to any of the preceding claims, comprising a photovoltaic panel (5) integrated in the internal structure of said facet (1).

7. Facet (1) according to any of the preceding claim, wherein the photovoltaic panel (5) is arranged at one or more housings (9') disposed at the intermediate layer (8).

8. Facet (1) according to any of claims 6-7, further comprising an integrated heat dissipation grid which is fixed to the surfaces of the photovoltaic panel (5); and/or a plurality of heat dissipation channels or holes (5') disposed in the inner part of the facet (1), practiced mechanically or by removable inserts.

9. Facet (1) according to the preceding claim, wherein the heat dissipation channels or holes (5') are arranged at the back side of the photovoltaic panel (5).

10. Facet (1) according to any of claims 6-9, wherein the photovoltaic panel (5) is wholly or partially covered by the front layer (6) of said facet (1), being this front layer (6) transparent at the region covering the photovoltaic panel (5).

11. Facet (1) according to any of claims 6-10, wherein the photovoltaic panel (5) is wholly or partially allocated in a housing (9) arranged at the intermediate layer (8) of said facet (1).

12. Autonomous solar concentrator (2) comprising:
- a facet (1) according to any of preceding claims;
- a pedestal (10) arranged as a main structural support means for the solar concentrator (2);
- a control unit (11) of the solar concentrator (2);
- a drive system (12) configured to confer the solar concentrator (2) two-axis tracking capacities.

13. Solar concentrator (2) according to the preceding claim, further comprising a wireless communication system integrated into the control unit (11) of said concentrator (2).

14. Solar concentrator (2) according to any of the preceding claims, comprising a facet according to any of claims 6-9 in combination with a system for storing electric energy from the photovoltaic panel (5) of said concentrator (2).

15. Solar concentrator (2) according to any of claims 10-12, wherein said concentrator (2) is a heliostat.

## Patentansprüche

1. Autonome Facette (1), die zur Verwendung als reflektierendes Element eines Solarkonzentrators (2) geeignet ist, die umfasst:
- eine Sandwich-Schicht-(6, 7, 8)-Anordnung, die eine Frontschicht (6), die eine reflektierende Oberfläche (3) der Facette (1) umfasst; eine Zwischenschicht (8); und eine Rückschicht (7) zum Isolieren und/oder Stützen der Zwischenschicht (8) einschließt, **dadurch gekennzeichnet, dass** die Facette (1) ferner umfasst:
- einen oder mehrere Selbstkalibrierungssensoren (4) zum Ausrichten der reflektierenden Oberfläche (3) in Richtung einer Sonnenposition und/oder eines Strahlungsempfängers;
wobei:
- die Sensoren (4) mindestens teilweise in die Frontschicht (6) der Facette (1) integriert und an einem oder mehreren Gehäusen (9) angeordnet sind, die an der Zwischenschicht (8) davon ausgebildet sind; und
- mindestens ein Sensor (4) eine Frontfläche umfasst, die mit der reflektierenden Oberfläche (3) der Facette (1) nivelliert ist.

2. Facette (1) nach dem vorhergehenden Anspruch, wobei die Sensoren (4) einen integrierten Neigungsmesser zum Messen der Winkelposition der Facette (1); eine oder mehrere Kameras für künstliches Sehen; und/oder einen oder mehrere Strahlungsdetektoren umfassen.

3. Facette (1) nach einem der vorhergehenden Ansprüche, wobei die Sensoren (4) ganz oder teilweise von der Frontschicht (6) der Facette (1) bedeckt sind.

4. Facette (1) nach einem der vorhergehenden Ansprüche, umfassend einen Steifigkeitswert gleich oder größer als 200 Pa/mrad_{RMS}.

5. Facette (1) nach einem der vorhergehenden Ansprüche, wobei die Frontschicht (6) einen reflektierenden Spiegel mit einem Dickenwert zwischen 0,95 mm und 2,00 mm umfasst.

6. Facette (1) nach einem der vorhergehenden Ansprüche, umfassend ein Photovoltaikpanel (5), das in die innere Struktur der Facette (1) integriert ist.

7. Facette (1) nach einem der vorhergehenden Ansprüche, wobei das Photovoltaikpanel (5) an einem oder mehreren Gehäusen (9') angeordnet ist, die an der Zwischenschicht (8) angeordnet sind.

8. Facette (1) nach einem der Ansprüche 6 - 7, ferner umfassend ein integriertes Wärmeableitungsgitter, das an den Oberflächen des Photovoltaikpanels (5) befestigt ist; und/oder eine Vielzahl von Wärmeableitungskanälen oder -löchern (5'), die im inneren Teil der Facette (1) angeordnet sind, die mechanisch oder durch entfernbare Einsätze durchgeführt sind.

9. Facette (1) nach dem vorhergehenden Anspruch, wobei die Wärmeableitungskanäle oder -löcher (5') an der Rückseite des Photovoltaikpanels (5) angeordnet sind.

10. Facette (1) nach einem der Ansprüche 6 - 9, wobei das Photovoltaikpanel (5) ganz oder teilweise von der Frontschicht (6) der Facette (1) bedeckt ist, wobei diese Frontschicht (6) an dem Bereich, der das Photovoltaikpanel (5) bedeckt, transparent ist.

11. Facette (1) nach einem der Ansprüche 6 - 10, wobei das Photovoltaikpanel (5) ganz oder teilweise in einem Gehäuse (9) angeordnet ist, das an der Zwischenschicht (8) der Facette (1) angeordnet ist.

12. Autonomer Solarkonzentrator (2), umfassend
- eine Facette (1) nach einem der vorhergehenden Ansprüche;
- einen Sockel (10), der als Hauptstrukturstützmittel für den Solarkonzentrator (2) angeordnet ist;
- eine Steuereinheit (11) des Solarkonzentrators (2);
- ein Antriebssystem (12), das konfiguriert ist, um dem Solarkonzentrator (2) zweiachsige Nachführkapazitäten zu verleihen.

13. Solarkonzentrator (2) nach dem vorhergehenden Anspruch, ferner umfassend ein drahtloses Kommunikationssystem, das in die Steuereinheit (11) des Konzentrators (2) integriert ist.

14. Solarkonzentrator (2) nach einem der vorhergehenden Ansprüche, umfassend eine Facette nach einem der Ansprüche 6 - 9 in Kombination mit einem System zum Speichern von elektrischer Energie von dem Photovoltaikpanel (5) des Konzentrators (2).

15. Solarkonzentrator (2) nach einem der Ansprüche 10 - 12, wobei der Konzentrator (2) ein Heliostat ist.

## Revendications

1. Facette autonome (1) apte à être utilisée comme élément réfléchissant d'un concentrateur solaire (2), qui comprend :
- un agencement en couches en sandwich (6, 7, 8), incluant une couche avant (6) qui comprend une surface réfléchissante (3) de la facette (1) ; une couche intermédiaire (8) ; et une couche arrière (7) pour isoler et/ou supporter la couche intermédiaire (8), **caractérisée en ce que** ladite facette (1) comprend en outre :
- un ou plusieurs capteurs d'auto-étalonnage (4) pour orienter la surface réfléchissante (3) vers la position solaire et/ou un récepteur de rayonnement ;
dans laquelle :
- lesdits capteurs (4) sont intégrés, au moins en partie, dans la couche avant (6) de la facette (1) et agencés au niveau d'un ou plusieurs boîtiers (9) formés au niveau de la couche intermédiaire (8) de celle-ci ; et
- au moins un capteur (4) comprend une surface avant qui est au niveau de la surface réfléchissante (3) de la facette (1).

2. Facette (1) selon la revendication précédente dans laquelle les capteurs (4) comprennent un inclinomètre intégré pour mesurer la position angulaire de la facette (1); une ou plusieurs caméras de vision artificielle; et/ou un ou plusieurs détecteurs de rayonnement.

3. Facette (1) selon l'une quelconque des revendications précédentes dans laquelle les capteurs (4) sont entièrement ou partiellement recouverts par la couche avant (6) de ladite facette (1).

4. Facette (1) selon l'une quelconque des revendications précédentes, comprenant une valeur de rigidité égale ou supérieure à 200 Pa/mrad_{RMS}.

5. Facette (1) selon l'une quelconque des revendications précédentes, dans laquelle la couche avant (6) comprend un miroir réfléchissant avec une valeur d'épaisseur comprise entre 0,95 mm et 2,00 mm.

6. Facette (1) selon l'une quelconque des revendications précédentes, comprenant un panneau photovoltaïque (5) intégré dans la structure intérieure de ladite facette (1).

7. Facette (1) selon l'une quelconque des revendications précédentes, dans laquelle le panneau photovoltaïque (5) est agencé au niveau d'un ou plusieurs boîtiers (9') disposés au niveau de la couche intermédiaire (8).

8. Facette (1) selon l'une quelconque des revendications 6 à 7, comprenant en outre une grille de dissipation thermique intégrée qui est fixée aux surfaces du panneau photovoltaïque (5) ; et/ou une pluralité de canaux ou trous de dissipation thermique (5') disposés dans la partie interne de la facette (1), pratiqués mécaniquement ou par inserts amovibles.

9. Facette (1) selon la revendication précédente, dans laquelle les canaux ou trous de dissipation de chaleur (5') sont agencés au niveau du côté arrière du panneau photovoltaïque (5).

10. Facette (1) selon l'une quelconque des revendications 6 à 9, dans laquelle le panneau photovoltaïque (5) est entièrement ou partiellement recouvert par la couche avant (6) de ladite facette (1), cette couche avant (6) étant transparente au niveau de la zone recouvrant le panneau photovoltaïque (5).

11. Facette (1) selon l'une quelconque des revendications 6 à 10, dans laquelle le panneau photovoltaïque (5) est entièrement ou partiellement affecté dans un boîtier (9) agencé au niveau de la couche intermédiaire (8) de ladite facette (1).

12. Concentrateur solaire autonome (2) comprenant
- une facette (1) selon l'une quelconque des revendications précédentes ;
- un socle (10) agencé comme moyen de support structurel principal pour le concentrateur solaire (2) ;
- une unité de contrôle (11) du concentrateur solaire (2) ;
- un système d'entraînement (12) configuré pour conférer au concentrateur solaire (2) des capacités de suivi sur deux axes.

13. Concentrateur solaire (2) selon la revendication précédente, comprenant en outre un système de communication sans fil intégré dans l'unité de contrôle (11) dudit concentrateur (2).

14. Concentrateur solaire (2) selon l'une quelconque des revendications précédentes, comprenant une facette selon l'une quelconque des revendications 6 à 9 en combinaison avec un système pour stocker l'énergie électrique du panneau photovoltaïque (5) dudit concentrateur (2).

15. Concentrateur solaire (2) selon l'une quelconque des revendications 10 à 12, dans lequel ledit concentrateur (2) est un héliostat.
